(19) **Europäisches Patentamt / European Patent Office / Office européen des brevets**

(11) **EP 1 478 140 B1**

(12) **FASCICULE DE BREVET EUROPEEN**

(45) Date de publication et mention
de la délivrance du brevet:
**21.02.2007 Bulletin 2007/08**

(51) Int Cl.:
*H04L 12/56* (2006.01)

(21) Numéro de dépôt: **04290892.1**

(22) Date de dépôt: **05.04.2004**

(54) **Procédé et dispositif d'ordonnancement de paquets sur un lien de réseau en fonction d'une priorité basée sur l'analyse du débit d'arrivée des flots**

Verfahren und Vorrichtung zur Ablauffolgeplanung von Paketen auf einer Netzwerkverbindung mit einer auf der Eingangsrate basierenden Priorität

Method and Apparatus for scheduling packets on a network link using priorities based on the incoming packet rates of the flow

(84) Etats contractants désignés:
**AT BE BG CH CY CZ DE DK EE ES FI FR GB GR HU IE IT LI LU MC NL PL PT RO SE SI SK TR**

(30) Priorité: **24.04.2003 FR 0305069**

(43) Date de publication de la demande:
**17.11.2004 Bulletin 2004/47**

(73) Titulaire: **FRANCE TELECOM**
**75015 Paris (FR)**

(72) Inventeurs:
• **Oueslati, Sara**
**92130 Issy-les-Moulineaux (FR)**
• **Roberts, James**
**78960 Voisins-le-Bretonneux (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**WO-A-99/66676          WO-A-02/062013**

• **SONG WANG ET AL: "A priority-based weighted fair queueing scheduler for real-time network" REAL-TIME COMPUTING SYSTEMS AND APPLICATIONS, 1999. RTCSA '99. SIXTH INTERNATIONAL CONFERENCE ON HONG KONG, CHINA 13-15 DEC. 1999, LOS ALAMITOS, CA, USA,IEEE COMPUT. SOC, US, 13 décembre 1999 (1999-12-13), pages 312-319, XP010365375 ISBN: 0-7695-0306-3**

**Description**

**Domaine technique et art antérieur**

L'invention concerne le domaine de l'architecture de réseaux de paquets et la gestion de la qualité de service de ces réseaux.

L'internet est à vocation multiservice et appelé à fournir le support pour une large gamme de services et d'applications. On distingue deux grandes classes de trafic dans ce réseau le trafic temps réel (ou trafic « streaming ») produit en général par les applications audio ou vidéo, et le trafic de données (ou trafic élastique) correspondant au transfert de documents numériques. Le trafic temps réel a des exigences de qualité de service correspondant au besoin de conservation du signal - les variations de débit qui caractérisent le signal produit par la source doivent être préservées lorsque le signal traverse le réseau. La qualité de service du trafic de données se mesure par le temps de transfert des documents. Ce temps, ou de manière équivalente le débit moyen réalisé lors du transfert, dépend de toute la chaîne de communication de la source à la destination. Un objectif de qualité de service pour un réseau internet pourrait être de paraître transparent au trafic de données en n'introduisant pas de réduction de débit supplémentaire par rapport aux limitations introduites ailleurs (serveur, réseaux d'accès, équipement de l'utilisateur); dans ce sens le réseau assure la conservation du débit des flots de données.

Le réseau internet public offre un service de transport à des 30 clients utilisateurs dans un contexte commercial. La question de la tarification est donc importante. L'architecture de réseau doit permettre un retour sur investissement pour l'opérateur avec des prix compétitifs pour les services de qualité demandés par les utilisateurs.

Différentes propositions d'architecture de réseau répondent diversement à ces exigences de qualité et de rentabilité. Certaines comme Intserv, Diffserv ou MPLS-TE sont normalisées tandis que d'autres restent propriétaires.

L'architecture de réseau IP existante, appelée « architecture best effort » (ou architecture du « meilleur effort »), n'offre aucune garantie de qualité de service. La performance est rendue satisfaisante par le surdimensionnement. La performance dépend également de la coopération des utilisateurs qui, en principe, doivent régler le débit de leurs applications en fonction de l'état de congestion du réseau (grâce notamment aux protocoles TCP et « TCP-friendly »). Les paquets des trafics temps réel et de données sont traités sans distinction.

Les routeurs IP emploient couramment le principe d'un partage de charge lorsque deux ou plusieurs chemins sont disponibles pour l'acheminement d'un paquet. Le choix pour un paquet donné est typiquement déterminé par l'application d'une fonction « hash » à l'adresse IP d'origine du paquet : cette fonction donne comme résultat un entier désignant l'interface en question. Ainsi, la charge est répartie sur les différents chemins tandis que tous les paquets d'un même flot suivent le même chemin et arrivent donc dans le bon ordre.

La tarification est en général forfaitaire pour les petits utilisateurs. En revanche, les gros utilisateurs peuvent payer l'opérateur en fonction du volume de trafic émis (ou reçu). Dans ce cas, il y a en général un contrat spécifiant les caractéristiques de qualité de service offertes : taux de perte de paquets, délai de traversé, éléments de fiabilité.

Parmi les différentes propositions d'architecture évoluées permettant d'améliorer l'architecture ci-dessus, la plupart utilisent un principe de réservation de ressources. Le réseau et l'utilisateur établissent un « contrat de trafic » pour une communication prévue :

- l'utilisateur annonce la communication prévue en décrivant la nature du trafic,
- le réseau affecte si possible les ressources nécessaires (contrôle d'admission),
- le trafic émis est contrôlé à l'accès afin de vérifier qu'il respecte la description préalable (ou les ressources attribuées sont contrôlées par un ordonnancement de type WFQ).

Selon l'architecture proposée, ce contrat concerne diversement un micro-flot ou un agrégat de flots, une communication point à point ou une communication multipoint.

La tarification fait partie du contrat. Elle dépend en général de la description de trafic fournie par l'utilisateur qui conditionne l'attribution de ressources.

Dans la différenciation par classe de service, le réseau traite d'une manière spécifique tous les paquets appartenant à une même classe. On distingue la différenciation entre les deux types de qualité nécessaires respectivement au trafic temps réel et au trafic de données, et la différenciation entre niveaux différents de qualité d'un même type. Il est nécessaire en général de contrôler soigneusement l'attribution des paquets aux différentes classes de service en respectant les termes d'un contrat entre l'usager et l'opérateur portant sur des agrégats de trafic.

La tarification fait partie du contrat. Elle dépend en général du volume de trafic émis dans chaque classe. Il y a nécessairement une différenciation de tarif par niveau de qualité car, sinon, chaque utilisateur placerait tout son trafic dans la classe de qualité la plus haute.

L'Internet auto-géré décrit par F.P. Kelly dans " Models for a self-managed Internet", Philosophical Transactions of the Royal Society, Vol. A358, pages 2335-2348, 2000, évite le recours à la réservation et à l'utilisation de classes de service. Dans cette architecture, le réseau émet en cas de congestion des marques ECN (« Explicit Congestion Notification ») munies d'un « coût » unitaire. Les utilisateurs peuvent moduler leur « facture » en fonction de leur réaction aux marques reçues ils peuvent ainsi ignorer la congestion en ne réagissant pas aux marques reçues s'ils acceptent de payer davantage pour leur communication.

La nécessité de distinguer trafic temps réel et trafic de données est en principe évitée. On prétend rendre négligeable le délai des paquets (suffisamment faible pour les flots temps réels) en utilisant l'occupation d'une file d'attente virtuelle pour décider le marquage ECN.

Le réseau auto-géré ne nécessite pas la mise en place d'un protocole de signalisation spécifique et permet une gestion de ressource aussi simple que celle d'un réseau « best effort ».

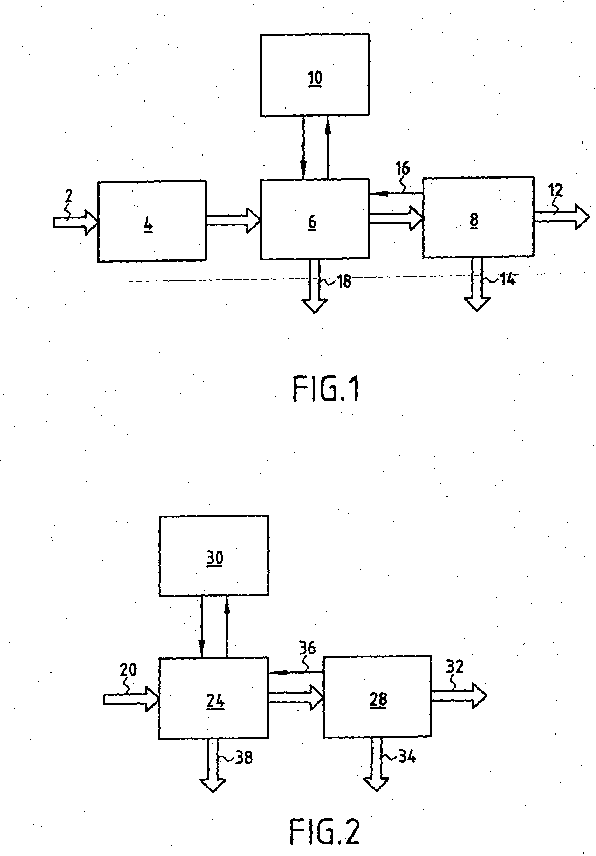

Dans l'architecture de type « flow-aware networking » (réseau avec connaissance des flots), décrite par exemple par J. Roberts et al. dans « Quality of service by flow-aware networking », Philosophical Transactions of the Royal Society, Vol A358, pages 2197-2207, 2000, on identifie « au vol » chaque flot utilisateur et on effectue un contrôle de trafic sur la base de ces flots. Un flot est un ensemble de paquets ayant les mêmes valeurs dans certains champs invariants de l'entête. Ces champs sont typiquement les adresses IP d'origine et de destination, les numéros de ports du protocole de transport en IPv4 ou le champs « flow label » de IPv6. Un flot peut être spécifié par ces valeurs associées à une durée d'inactivité (temporisation). Un flot se termine lorsque aucun paquet n'est observé pendant cet intervalle d'inactivité. Le principe et les éléments de cette architecture sont représentés en figure 1. Des moyens 4 assurent une police du débit crête des flots temps réel. Les paquets sont ensuite transmis à un module 6 de décision d'acheminement, qui consulte une liste 10 de flots protégés. Il transmet les paquets admis à un module 8 qui les ordonne selon une file prioritaire. Celle-ci donne priorité aux paquets des flots de type « temps réel ». Des données 16 de conditions d'admissibilité sont envoyées par le module 8 au module 6. Il s'agit essentiellement d'une estimation du débit cumulé actuel des flots temps réel et d'une mesure de la bande passante disponible pour un flot de données.

Un contrôle implicite d'admission est appliqué pour empêcher le démarrage de nouveaux flots lorsqu'un lien ou un chemin est momentanément en état de congestion. Ce contrôle a pour objet la protection de la qualité de service des flots déjà entamés. Plusieurs propositions pour la réalisation d'un contrôle implicite d'admission sont apparues dans la littérature, par exemple dans l'article de A. Kumar et al. « Non-intrusive TCP connection admission control for bandwidth management of an Internet access link », IEEE Comm. Mag. Vol 38, No 5, pages 160-167, 2000.

Dans l'architecture de la figure 1, on applique une différenciation par classe de service pour distinguer trafic temps réel et trafic de données. Cependant, les conditions d'admission ne dépendent ni du type ni des caractéristiques particulières de trafic des flots. On évite ainsi le besoin de signaler les caractéristiques de trafic des flots. Il reste nécessaire d'assurer à l'accès que le débit crête des flots temps réel ne dépasse pas une limite préétablie. La connaissance de cette limite est obligatoire pour déterminer les conditions d'admission (voir l'article de T. Bonald et al. « IP traffic and QoS control towards a flow-aware architecture », Proc. of World Telecom. Conf., Paris 2002).

La tarification dans cette architecture pourrait ne dépendre que du volume de trafic émis (ou reçu) par un client. Tout flot commencé est efficace (car protégé) et donc redevable. La distinction temps réel/données ne nécessite pas une différenciation de tarif car il n'y a pas d'incitation de substitution : les flots temps réel subissent perte et délai négligeables tandis que les flots de données ne sont pas limités en débit.

Un autre type d'architecture de type « flow-aware » est proposé par la société américaine Caspian Networks (voir par exemple les publications de demandes de brevet US-2002/57699, US-2002/57651 et US-2002/80786). Les flots sont identifiés « au vol » comme ci-dessus. Avec chaque flot admis, on associe des paramètres de qualité de service et une route. Les paramètres de qualité de service sont déduits de diverses sources d'informations dont l'entête des paquets et une table de spécifications déduites du SLA de l'utilisateur. La route est calculée, en fonction des paramètres de qualité de service et de l'utilisation actuelle des ressources du réseau, afin de respecter les exigences de performance du flot. Les paramètres de qualité de service précisent entre autre un débit garanti (GR, pour « guaranteed rate »). Un débit disponible (AR, pour « available rate ») est attribué au flot pour un certain intervalle de temps en fonction de l'état de congestion de sa route. Cette architecture emploie un ordonnancement en entrée pour assurer que le débit du flot respecte le débit attribué (GR + AR). Un ordonnancement en sortie assure le respect des exigences de performance (délai par paquet notamment). L'ordonnancement en entrée est par espacement avec rejet des paquets en trop, et l'ordonnancement en sortie utilise un algorithme de type WFQ par flot. Le contrôle d'admission des flots doit être employé lorsqu'il est impossible de trouver une route adéquate pour un nouveau flot entrant.

Les architectures qu'on vient de décrire possèdent toutes des inconvénients liés, de manières diverses, à la nature des garanties de qualité, à la complexité de mise en oeuvre ou à la rentabilité du réseau.

Les inconvénients d'une architecture de type « best effort » sont bien connus:

- dégradation de la performance de toutes les communications en cas de congestion,
- délais et pertes de paquet incontrôlés pour les communications temps réel en concurrence avec le trafic de données,
- partage de bande passante non équitable, notamment si certains utilisateurs sont malveillants,
- coût éventuellement élevé pour assurer la qualité de service par surdimensionnement,

- la tarification forfaitaire rend difficile la définition d'un prix juste assurant le retour sur investissement lorsque le trafic des utilisateurs est très variable,
- la tarification en fonction du volume de trafic est contestable en raison de la sensibilité de ce dernier à la congestion (renouvellement de paquets perdus) et le non respect éventuel d'un niveau de qualité minimal occasionnant l'abandon de communications en cours.

Concernant le principe de réservation, les inconvénients suivants apparaissent :

- il s'avère impossible en pratique de décrire le trafic d'une communication (à débit typiquement très variable) de manière succincte avec des paramètres contrôlables à l'accès,
- la mise en oeuvre de la réservation est complexe, nécessitant un protocole de signalisation, le maintien de bases de données avec les paramètres de chaque communication (appelé « state » en anglais) et la mise en oeuvre de mécanismes d'ordonnancement.
- la notion de réservation devient imprécise si le chemin emprunté par une communication ne peut pas être spécifié (« réservation » pour un ensemble de flux de trafic à destinations différentes dans le cas d'une architecture Diffserv notamment, instabilité du routage IP....),
- une garantie stricte de qualité de service - dans le « service garanti » de Intserv, par exemple - est une solution coûteuse en ressources,
- la sur-réservation, communément appliquée pour compenser le fait que les utilisateurs sur-estiment leur trafic, conduit à une absence de garantie réelle,
- la tarification est problématique en cas de sur-réservation, la tarification sur la base des paramètres de trafic (du contrat de trafic) n'est pas en relation directe avec le coût de la communication (qui dépend du volume de trafic réellement émis) ; en cas de garantie stricte, une tarification en rapport avec la quantité des ressources réservées (bande passante, mémoire) risque d'être prohibitive.

La différenciation par classe de service introduit d'autres inconvénients :

- une absence de garanties de qualité de service quantifiables et vérifiables pour le trafic de données,
- impossibilité de garantir la qualité de service du trafic temps réel lorsque le chemin des communications n'est pas fixé,
- la gestion des limites de trafic par classe et par utilisateur reste complexe (gestion de SLA, serveurs de « policy », signalisation des paramètres de trafic...)
- le trafic à l'intérieur d'une classe de faible priorité subit les mêmes inconvénients que le trafic dans une architecture de type « best effort » (effondrement de la performance en cas de congestion, pas de protection contre les usagers malveillants),
- la tarification des différentes classes de service est problématique une différence de prix est nécessaire mais peut être mal perçue par les utilisateurs si une différence en qualité n'est pas manifeste,
- l'absence de relation directe entre tarif et coût rend difficile la définition d'une tarification permettant le nécessaire retour sur investissement.

L'Internet auto-géré évite bon nombre d'inconvénients parmi ceux précédemment cités mais s'appuie sur un principe de tarification qui est lui-même problématique :

- la mise en oeuvre d'une tarification basée sur les marques ECN est complexe et sujet à contestation,
- comment facturer un usager abonné au réseau de l'opérateur A pour les marques de congestion provenant du réseau aval appartenant à un autre opérateur B ?
- le revenu de la tarification ECN n'assure pas le retour sur investissement d'un réseau bien dimensionné; sachant qu'un autre principe de tarification doit assurer ce retour, la tarification ECN pourrait paraître aux usagers comme une surcharge injustifiée.

L'architecture de type « flow-aware » exposée dans les publications citées ci-dessus possède encore les inconvénients suivants :

- la différenciation explicite entre trafic temps réel et trafic de données nécessite de contrôler le débit crête des flots temps réel,
- il est nécessaire de fixer un débit crête maximal pour les flots temps réel et de le contrôler rigoureusement, alors qu'en l'absence de congestion, il serait possible d'admettre des flots à plus fort débit sans nuire à la performance,
- la performance reste vulnérable à la malveillance éventuelle de la part des utilisateurs,
- les méthodes proposées pour mesurer l'état de congestion (estimation de la bande passante disponible avec une connexion TCP fantôme ou à partir de l'observation du taux de perte) peuvent être difficiles à mettre en oeuvre.

Quant à l'architecture de type « flow-aware » de Caspian, signalons les inconvénients suivants :

- la prise en compte de paramètres de qualité de service et de trafic par flot nécessite une mise en oeuvre complexe qui pourrait poser des problèmes d'extensibilité,
- la littérature disponible sur cette architecture ne précise pas les méthodes employées pour faire respecter la qualité de service des flots; or, ces méthodes, et notamment la définition des principes de contrôle d'admission, sont déterminantes pour l'efficacité de l'architecture proposée,
- les ordonnancements évoqués (espacement en entrée, WFQ 10 par flot en sortie) nécessitent de connaître des paramètres spécifiques par flot (notamment, s'ils sont de type temps réel - GR, MR - ou de type données - AR) afin de respecter leurs exigences de qualité de service.
- la question de la tarification n'est pas abordée.

Le document WO 02062013 décrit un algorithme et un dispositif qui intègrent un ordonnancement de type « partage équitable » avec un traitement prioritaire de certains paquets en fonction des informations qu'ils contiennent. Le document Wang et al., « A priority based WFQ schedules for real time networks » XP 010365375, décrit un système d'ordonnancement basé sur des attributs associés aux sessions.

## Exposé de l'invention :

L'invention a pour objet un dispositif ainsi qu'un procédé de traitement de paquets de flots sur un lien de réseau comme décrit dans les revendications indépendantes 1 à 19.

Un ordonnancement de type « partage équitable avec priorité » permet de donner priorité aux paquets des flots dont le débit est inférieur à un seuil dynamique. Ce seuil correspond par exemple au débit actuellement réalisé par les flots qui ont plusieurs paquets en attente sachant que ces derniers sont desservis selon un algorithme de type « partage équitable ».

Un tel dispositif ou procédé peut fonctionner, sans moyens de contrôle d'admission, notamment dans le cadre d'un réseau d'accès où le risque de congestion est davantage maîtrisable qu'en coeur de réseau.

Selon l'invention, on peut aussi associer un contrôle d'admission par flot avec un ordonnancement du type « partage équitable » (« fair queueing » en anglais).

L'invention a donc également pour objet un dispositif et un procédé de traitement de paquets des flots sur un lien de réseau, comportant :

- des moyens, respectivement une étape, de contrôle d'admission pour contrôler l'admission desdits flots dans le dispositif, selon des critères dits critères d'admission,
- des moyens, respectivement une étape d'ordonnancement pour ordonner les paquets dans une file d'attente, selon un algorithme de partage équitable avec priorité.

Les moyens d'ordonnancement peuvent envoyer aux moyens de contrôle d'admission des données de conditions d'admissibilité.

Ce dispositif et ce procédé permettent d'assurer une qualité de service, sans explicitement distinguer entre flots temps réel et flots des données.

Ainsi, on minimise le délai des paquets des flots temps réel, dont le débit reste inférieur à un seuil déterminé par les conditions d'admission. Si le contrôle d'admission n'est pas activé, ce seuil est déterminé plutôt par les conditions de trafic.

Les conditions d'admissibilité sont déterminées directement par des moyens d'ordonnancement qui mesurent le débit équitable réalisé par les flots de données ainsi que la charge représentée par les paquets prioritaires.

L'association du contrôle d'admission et l'ordonnancement de type partage équitable permet de réaliser une certaine « protection croisée » :

on protège le débit des flots de données en assurant un partage équitable,
- on protège le délai paquet des flots temps réel en leur assurant la priorité,
- on évite la complexité de l'ordonnancement partage équitable en limitant par contrôle d'admission le nombre de flots à prendre en compte,
- le contrôle d'admission est facilité par les mesures intégrées aux moyens d'ordonnancement.

En associant les techniques de contrôle d'admission (implicite) et l'ordonnancement de partage équitable, l'invention permet d'assurer une qualité « adéquate » sans déclaration de caractéristiques de trafic, sans définition de classes de service, sans signalisation et sans réservation explicite de ressources.

Si le contrôle d'admission n'est pas activé, on perd certains avantages de la protection croisée mais on préserve la différenciation implicite de qualité de service à condition que le lien ne soit pas en congestion. Les paquets des flots temps réel de faible débit ne subissent qu'une attente faible alors que les flots de données peuvent atteindre le débit assuré par le partage équitable. Cette configuration peut suffire notamment dans le cas d'un lien du réseau d'accès où le risque de congestion est moindre du fait du nombre relativement faible d'utilisateurs desservis. ,

L'ordonnancement choisi rend l'architecture invulnérable à la non-coopération éventuelle de la part des utilisateurs. L'architecture permet une tarification simple sur la base du volume de trafic émis ou reçu. On retient la simplicité des relations usager-opérateur du réseau auto-géré sans les inconvénients liés à la tarification en fonction des marques ECN. Cette simplicité s'accompagne de la robustesse et de l'efficacité de l'architecture « flow-aware ».

Les flots dont le débit en arrivée est tel qu'ils maintiennent au moins un paquet dans la file d'attente réalisent en sortie approximativement le même débit dit « débit équitable ». Selon l'invention, si les paquets d'un flot temps réel arrivent en rafale avec un débit momentanément supérieur au débit équitable (à cause d'attentes dans les files amont, par exemple), le dispositif d'ordonnancement fera passer le premier paquet en priorité mais retardera les suivants en imposant un espacement compatible avec le débit équitable. Si le débit primitif du flot est inférieur à ce débit équitable, l'espacement « lisse » le flot en n'introduisant pas de délai supplémentaire par rapport au délai imposé par la mémoire de réception à la destination (qui doit émettre à l'utilisateur final les paquets à leur cadence initiale). Dans ce sens, le délai reste négligeable. Un flot temps réel dont le débit est supérieur au débit équitable serait par contre altéré et la source typiquement obligée à une réduction de débit pour éviter la perte de paquets.

Les mécanismes mis en oeuvre garantissent donc un délai et une perte de paquet négligeables pour les flots dont le débit crête, déterminé par des éléments extérieurs au réseau en question, est inférieur à un certain seuil. Ce seuil est dynamique et correspond au débit équitable (au sens max-min) réalisé par l'ordonnancement choisi. Le contrôle d'admission réalise alors le double objectif de conservation du débit des flots de données et de conservation du signal des flots temps réel.

Le contrôle d'admission rend extensible l'ordonnancement de partage équitable en limitant le nombre de flots à prendre en compte. Le partage équitable facilite la mesure de l'état de congestion du lien desservi, mesure qui permet de déterminer les conditions d'admission.

L'invention permet d'utiliser un dispositif et un procédé d'ordonnancement de type partage équitable avec priorité pour distinguer de manière implicite les flots temps réel et les flots de données, en assurant aux premiers un délai par paquet faible.

L'association du contrôle implicite d'admission par flot avec l'ordonnancement de partage équitable avec priorité permet d'assurer la qualité de service sans explicitement distinguer les flots temps réel et données.

On peut utiliser un mécanisme de partage de charge pour réaliser un acheminement adaptatif à partir de l'identifiant des flots. En effet, le contrôle d'admission refuse les flots qui arrivent lorsque le lien est en congestion en rejetant le premier paquet reçu. Le trafic correspondant n'est pas perdu pour autant si l'utilisateur renouvelle sa tentative en réémettant le même paquet jusqu'au succès. La probabilité de succès est plus grande si à chaque tentative le paquet est présenté à un autre lien capable de l'acheminer vers sa destination.

A cette fin le mécanisme de partage de charge employé par le routeur peut agir sur l'identificateur de flot, celui-ci comportant un champ rempli librement par l'utilisateur (par exemple, un numéro de port en IPv4, le « flow label » en IPv6). La fonction de « hash » réalisant le partage de charge inclut comme argument ce champs libre de sorte que l'utilisateur réalise une forme de routage adaptatif en modifiant la valeur du champ en question à chaque renouvellement.

L'invention permet de combiner la robustesse du réseau avec connaissance des flots avec la simplicité de l'Internet autogéré. On retient du premier le contrôle implicite d'admission en évitant la nécessité pour l'utilisateur de distinguer le trafic temps réel du trafic de données. Cette distinction est faite automatiquement par le réseau en exploitant leurs différentes caractéristiques de trafic.

**Brève description des figures :**

- la figure 1 représente schématiquement des éléments de l'architecture « flow-aware networking »,
- la figure 2 représente des éléments d'une architecture selon l'invention,
- la figure 3 est un diagramme de région d'admissibilité,
- la figure 4 représente le principe d'une file d'attente PIFO,
- les figures 5 et 6 représentent un algorithme s'exécutant soit à l'arrivée d'un paquet soit à la fin d'une émission d'un paquet,
- les figures 7 et 8 représentent les opérations qui assurent la mesure des indicateurs de congestion, charge prioritaire et débit équitable.

## Description détaillée des modes de réalisation de l'invention :

Un premier mode de réalisation est illustré en figure 2.

Sur cette figure, la référence 24 désigne un module ou des moyens d'acheminement, qui effectuent le contrôle d'admission des paquets 20 des flots entrants.

La définition d'un flot est par exemple celle de l'architecture flow-aware exposée dans l'article de Bonald et al. " IP traffic and QoS control: the need for a flow-aware architecture", World Telecom Conférence, Paris, 2002.

Les paquets 20 présentés à ce module sont par exemple déterminés par des fonctions d'acheminement classiques qui peuvent inclure un partage de charge obtenu en appliquant une fonction « hash » à un sous-ensemble des champs de l'identificateur de flot. Une forme de routage adaptatif est réalisée en incluant dans ce sous-ensemble un champ de l'entête rempli librement par l'utilisateur (numéro de port du protocole de transport, « flow label » de IPv6).

Le module 24 consulte et met à jour une liste 30 de flots dits « protégés » : il s'agit, en fait, des flots admis (par les moyens 24) et actifs (c'est-à-dire qu'un nouveau paquet du flot a été identifié à l'intérieur d'une certain intervalle de temps).

La référence 28 désigne un module ou des moyens d'ordonnancement, qui vont permettre de gérer la file d'attente des paquets selon un algorithme ou un procédé de partage équitable avec priorité.

Selon cet algorithme, ou ce procédé, sont prioritaires les paquets des flots dont le débit ne dépasse pas le seuil correspondant au débit équitable actuel. Cette condition se manifeste par les valeurs de certains paramètres de l'algorithme de partage équitable employé, comme indiqué plus loin dans le cadre d'une réalisation particulière. Au contraire, les paquets des flots dont le débit d'arrivée dépasse le débit équitable sont classes comme « non-prioritaires ».

Ceci permet d'ailleurs de réguler le débit crête des flots temps réel. En effet, Les flots entrants 20 dont le débit est trop élevé seront identifiés par le module d'ordonnancement 28 et rétrogradés ou classés en tant que « non-prioritaires ».

Ce mécanisme remplace donc et permet d'éliminer le module 4 de police du débit crête des flots temps réel de la figure 1.

Par ailleurs, le module ou les moyens 28 vont fournir des données ou des paramètres 36 de conditions d'admissibilité au module 24 d'acheminement.

Enfin, la référence 32 désigne le départ des paquets tandis que les références 34 et 38 désignent le rejet des paquets respectivement par le module d'ordonnancement et par le module de contrôle d'admission.

Rappelons que dans un mode d'utilisation de l'invention, le module de contrôle d'admission peut être absent de sorte que les flots 20 se présente directement au module 28.

Ce mécanisme n'a pas besoin d'identifier a priori les paquets ou les flots comme étant de type temps réel ou élastique.

Typiquement, l'architecture de la figure 2 sera implémentée ou réalisée dans un routeur ou dans un processeur ou un microprocesseur pour un routeur, programmé pour réaliser les fonctions souhaitées.

Un exemple de réalisation du module 24 de décision d'acheminement va maintenant être décrit un peu plus précisément.

Dans un réseau IP classique, les flots sont acheminés sur un chemin unique, déterminé par l'adresse IP de destination, indépendamment de son état de congestion. Dans la présente architecture, un module de décision d'acheminement 24 décide, sur la base d'informations contenues dans une ou plusieurs listes 30 de flots protégés (LFP), si les paquets d'un flot donné doivent être acheminé ou non.

Une liste de flots protégés 30 est une liste d'identificateurs de flots indiquant pour chacun l'heure d'arrivée du dernier paquet. Chaque liste est associée à une partition de l'espace des identificateurs. Cette partition permet de limiter la capacité de chaque liste et donc de garantir l'extensibilité.

Un flot est effacé de la liste 30 lorsque le temps écoulé depuis le dernier paquet reçu pour le flot dépasse un seuil ou un intervalle de temporisation. La longueur de cet intervalle est un paramètre du système, par exemple de l'ordre de quelques secondes. De préférence, on dimensionne la table pour limiter la probabilité de saturation, c'est-à-dire un état où un flot devrait être admis dans la liste, alors que celle-ci est pleine. La conséquence d'une telle saturation serait seulement qu'un flot tarderait à acquérir le statut de flot protégé. Ses paquets seraient néanmoins acheminés correctement si l'état de congestion le permet. La probabilité de saturation peut être rendue suffisamment faible par un dimensionnement adéquat.

Les décisions d'acheminement sont prises à l'arrivée de tout paquet. Le module 24 détermine conjointement, à partir des informations de l'entête du paquet, l'interface de sortie et la liste appropriée. Si le paquet appartient à un flot protégé, il est acheminé directement. L'heure d'arrivée du dernier paquet est mise à jour dans la liste. Si le flot n'est pas déjà protégé, il faut procéder à une prise de décision d'acheminement.

Le paquet sera rejeté si des conditions d'admission ne sont pas satisfaites. La nature de ces conditions est expliquée plus loin. Les conditions appliquées peuvent dépendre d'attributs particuliers du paquet dont la valeur du champ « classe de trafic » en IPv6, ou le champ ToS en IPv4 ou des adresses IP source et destination.

Le contrôle d'admission permet d'assurer la transparence des flots admis : conservation du signal pour les flots temps réel, conservation du débit pour les flots de données. En fait, cette transparence n'est offerte qu'aux flots dont le débit crête (déterminé par les limitations externes) reste inférieur à un certain seuil. Le seuil de débit admissible est plus faible pour les flots temps réel que pour les flots de données car les garanties de transparence respectives (c'est-à-dire, conservation de débit et conservation de signal) impliquent des échelles de temps différentes dans les deux cas. Pour un flot temps réel, on cherche à s'assurer que le débit disponible soit plus grand que son débit crête sur une petite échelle de temps, compatible avec un délai « négligeable » des paquets (quelques millisecondes). Pour les flots de données, on cherche à réaliser approximativement un certain débit moyen sur une durée relativement grande (de l'ordre de quelques secondes).

Les deux débits crêtes en question résultent du choix des critères d'admission. Autrement dit, pour assurer la transparence des flots d'un certain débit, on définit une condition d'admission appropriée basée sur les mesures de congestion « débit équitable » et « charge prioritaire ». Pour le cas où les flots sont tous élastiques, le choix d'un seuil approprié pour le débit équitable est par exemple décrit par Ben Fredj et al. (Measurement based admission Control for Elastic Traffic, Teletraffic Engineering in the Internet Era, ITC 17, Elsevier, 2001). Soit *threshold*_1 (T1) le seuil en question. Si tous les flots sont de type temps réel à débit crête borné, un seuil d'admission sur la charge prioritaire peut être déduit de l'approche de Gibbens et al « A décision theoretic approach to Call Admission in ATM Networks », IEEE J. on Selected Areas in Communications, Vol. 13, No.6, p. 1101-1114, 1995. Soit *threshold*_2 (T2) ce deuxième seuil.

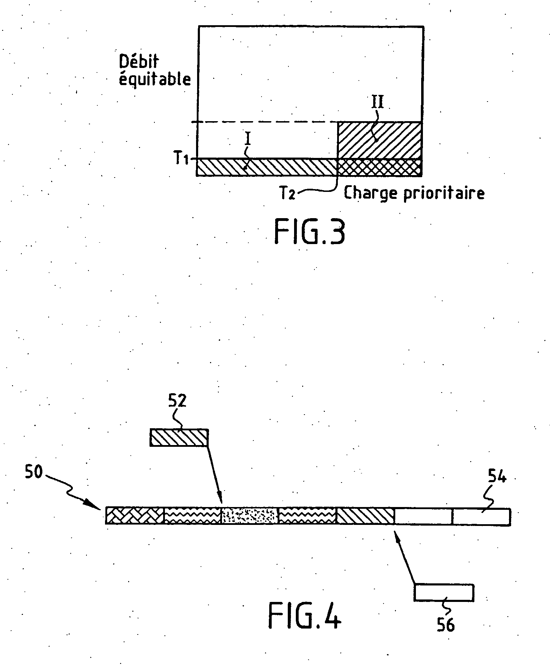

A titre d'exemple, la figure 3 montre une région d'admissibilité définie par ces deux seuils. On refuse un nouveau flot si le débit équitable est inférieur à T1 (zone I sur le graphique) ou si la charge prioritaire est supérieure à T2 et si le débit équitable est inférieur à T2 (zone II). En effet, si la charge prioritaire dépasse le seuil T2, mais si le débit équitable lui est supérieur, c'est une indication que les paquets comptés comme prioritaires ne proviennent pas exclusivement de flots temps réel à débit crête borné. Par expérimentation, on peut affiner la définition de cette région d'admissibilité.

On définit une fonction logique *Admit* (débit équitable, charge prioritaire) telle que si *Admit* vaut 1, il est possible d'accepter un nouveau flot et si *Admit* vaut 0, les nouveaux flots doivent être refusés. Selon un exemple simple de politique d'admission, tous les flots sont acceptés ou refusés dans les mêmes conditions. En effet, on ne peut deviner la nature d'un flot a priori. On fait donc une hypothèse « pire cas » et on considère que le nouveau flot pourrait être le plus exigeant et le plus dérangeant possible. Cette politique assure que tous les flots sont traités de manière équitable vis-à-vis du blocage.

Si, d'après les conditions d'admission, le paquet ne doit pas être refusé, il est acheminé via le lien correspondant. L'identité du flot est alors candidate pour inclusion dans la liste 30. Plusieurs critères supplémentaires pourraient être définis pour finalement autoriser cette inclusion. En particulier la décision pourrait être probabiliste avec probabilité *p* le flot est rajouté, avec probabilité *1-p* le paquet est acheminé mais le flot reste non protégé. Cette probabilité p peut dépendre des attributs du paquet dont la valeur du champ « classe de trafic », du champ ToS ou des adresses IP.

Si *p* est faible (0.1, par exemple), la plupart des flots de petite taille ne seront pas pris en compte alors que les grands flots seront protégés dès l'émission des premières dizaines de paquets. Un inconvénient de choisir *p < 1* est le rejet possible d'un flot en cours les paquets initiaux sont transmis mais une décision de contrôle d'admission vient interdire le flot avant qu'il ne passe à l'état de flot protégé.

En ce qui concerne les conditions d'admission mentionnées ci-dessus, elles vont dépendre de mesures de congestion effectuées au sein du dispositif ou des moyens 28 d'ordonnancement. On peut par exemple mesurer deux indicateurs, le débit équitable et la charge prioritaire :

- le débit équitable est une mesure du débit que réaliserait un flot de données qui aurait toujours des paquets à émettre,
- la charge prioritaire est la somme de la longueur des paquets prioritaires, transmis dans un certain intervalle, divisée par la durée de cet intervalle.

Pour estimer le débit équitable, on peut inclure dans l'algorithme d'ordonnancement un flot de paquets fictifs et on mesure le débit qu'aurait reçu ce flot en supposant qu'il a toujours des paquets à émettre. Bien entendu, les paquets fictifs ne sont pas réellement émis. On distingue deux cas :

- - en présence de flots avec plusieurs paquets en attente, le flot fictif insère ses paquets de manière cyclique entre leurs émissions en laissant passer les paquets prioritaires,
- lorsque la file d'attente est vide (aucun paquet réel en attente), le flot fictif est théoriquement asservi au débit du lien. Le calcul du débit équitable en fin de période de mesure tient compte de ces périodes d'inactivité.

En effectuant des mesures périodiques, on obtient un comptage en continu de l'état de charge du lien contrôlé. La période des mesures serait typiquement différente pour les deux valeurs de débit équitable (par exemple, de l'ordre de la centaine de millisecondes) et de charge prioritaire (par exemple, de l'ordre de la dizaine de millisecondes).

Les estimations utilisées par le contrôle d'admission pourront être, par exemple, des moyennes exponentiellement lissées des mesures par cycle (c'est-à-dire, estimateur ← $\alpha$ x estimateur + (1 - $\alpha$) x nouvelle mesure, pour 0 < $\alpha$ < 1).

Un exemple de réalisation du module 28 d'ordonnancement va maintenant être décrit plus précisément.

De préférence est mis en oeuvre un ordonnancement de type partage équitable (« fair queuing » en terminologie anglo-saxonne)

Un tel ordonnancement, dit SFQ, est par exemple décrit dans l'article de P. Gayal et al. "Start-time Fair Queueing: A scheduling algorithm for integrated services packet switching network", IEEE/ACM Trans. Networking, Vol 5, No 5, pp 690-704, 1997.

Ce type d'ordonnancement permet de partager de manière équitable la bande passante d'un lien entre les flots en cours en s'affranchissant du comportement coopératif des utilisateurs. Associé au contrôle d'admission, il permet en plus d'offrir une garantie de débit aux flots admis

Les problèmes d'extensibilité associés au « fair queuing » par flot sont évités, dans la présente architecture, en ne maintenant l'état d'un flot que pendant le temps où il est actif et en observant que le nombre de tels flots est nécessairement limité par le contrôle d'admission.

Priorité est donnée aux paquets arrivant lorsque le flot n'est pas « actif » dans le sens qu'il n'est pas inventorié dans une liste de flots. Ceci veut dire qu'il n'a pas déjà des paquets dans la file d'attente et n'en a pas eu depuis un certain intervalle de temps (déterminé par les paramètres courants de l'algorithme de partage équitable SFQ). En principe, un flot dont le débit crête ne dépasse pas le débit équitable ne sera pas actif lors de l'arrivée des paquets de ce flot.

Cette adaptation, couplée avec le contrôle d'admission, permet donc d'assurer une altération négligeable aux flots temps réel dont le débit ne dépasse pas un certain seuil.

Puisqu'on ne distingue pas, dans cette architecture, les flots temps réel et les flots de données, le dispositif d'ordonnancement donnera la priorité également à certains paquets des flots de données (tous les paquets d'un flot dont le débit reste inférieur au débit équitable, par exemple).

Cette ambiguïté ne pose pas de problème tant que le contrôle d'admission assure un délai négligeable pour les paquets prioritaires.

Pour illustrer le fonctionnement du dispositif d'ordonnancement, l'exemple d'un routeur va être donné, où la file d'attente se réalise uniquement en sortie (en anglais, routeur avec « output queueing »).

Est mis en oeuvre un système de file d'attente de type « PIFO » (abréviation de l'expression anglaise « Push in, first out »), qui admet un paquet à n'importe quelle position, déterminée par la valeur d'une estampille. La file se vide toujours par sa tête le paquet qui est positionné en tête de file est émis.

Selon cet exemple, le dispositif met en oeuvre les données suivantes ou les éléments suivants :

- une file « push in, first out » (PIFO) où les paquets sont stockés en ordre croissant d'une estampille; les éléments du PIFO sont des ensembles {*packet, time_stamp*} où *packet* désigne les informations afférentes au paquet (identificateur de flot, taille, adresse de stockage) et *time_stamp* est l'estampille (déterminée selon l'algorithme SFQ décrit plus loin),
- un pointeur *P* identifiant le dernier des paquets prioritaires à la tête de la PIFO; si la file ne contient aucun paquet prioritaire, *P* = zéro,
- une liste de flots *flow_list* contenant l'identificateur des flots actifs ainsi qu'une estampille de flot *flow_time_stamp* correspondant à la valeur de *time_stamp* du dernier paquet augmentée de sa longueur (il s'agit du « finish tag » du paquet en SFQ),
- un compteur de temps virtuel *virtual_time* permettant le calcul des estampilles.

Dans l'exemple de l'algorithme SFQ, déjà indiqué ci-dessus, le temps virtuel est égal à l'estampille (« start tag ») du dernier paquet à avoir commencé son émission.

Les estimateurs de congestion utilisent les données suivantes:

- le temps actuel *(local_time)* selon l'horloge locale,
- le nombre d'octets de paquets prioritaires transmis pendant l'intervalle de mesure courant, *priority_bytes*
- une variable logique indiquant si la file d'attente est vide, *silence_flag,*
- la durée cumulée des intervalles de silence, *silence_time,*
- l'heure de début de l'intervalle de silence en cours, *silence_start.*

La figure 4 représente schématiquement une file d'attente 50 de type PIFO. Un paquet 52 y est inséré en fonction de son estampille. Un paquet prioritaire 56 est à insérer dans les paquets de tête, le paquet 54 étant le prochain paquet à devoir être émis. Le paquet 56 va être inséré comme dernier des paquets prioritaires : c'est sur lui que le pointeur P va pointer, après son insertion dans la file. Notons que tous les paquets prioritaire héritent de la même estampille, égale à la valeur courante de *virtual_time*.

Pour estimer la charge prioritaire, il convient de mettre à jour, à chaque insertion dans la file PIFO d'un paquet prioritaire, un compteur d'octets *priority_bytes* Ce compteur est alors incrémenté de la valeur $L$ représentant la taille en octets du paquet. En échantillonnant ce compteur à intervalles réguliers, on déduit une estimation de la charge prioritaire comme la différence dans la valeur *priority_bytes* au début et à la fin de l'intervalle de mesure divisé par sa durée. Soit PB(T) la valeur de *priority_*bytes à l'instant T, (T1, T2) un intervalle de mesure (en secondes), C le débit du lien (en bits/ seconde). Alors un estimateur de charge prioritaire pour l'intervalle est :

$$\text{charge prioritaire} = (PB(T2) - PB(T1))*8/(T2 - T1) / C.$$

Pour estimer le débit équitable, plusieurs approches sont possibles sachant que, d'après Ben Fredj et al. dans l'article déjà cité, cette mesure ne doit pas être évaluée avec une très grande précision. Une méthode possible serait de compter le nombre de flots actifs (le nombre de flots dans la liste *flow_list)* et de prendre comme mesure de débit équitable, le débit du lien divisé par ce nombre. Dans les algorithmes décrits plus loin on utilise une autre approche basée sur la notion précitée de flot fictif.

On suppose que le flot fictif émet des paquets de longueur 1 octet qui s'insèrent entre les paquets réels dans un ordre dicté par l'algorithme SFQ. Dans une période où la file est toujours occupée, le nombre d'octets qu'aurait pu émettre le flot fictif se déduit de l'évolution du compteur de temps virtuel *virtual_time.* Lorsque la file est vide, le flot fictif aurait pu émettre au débit du lien. En conjuguant la succession de périodes d'occupation et de silence, on déduit l'estimateur suivant. Soit VT(T) la valeur de *virtual_time à* l'instant T, (T1, T2) un intervalle de mesure et S la durée totale de silence pendant cet intervalle. Alors, l'estimateur choisi est :

$$\text{débit équitable} = \max(\ S*C\ /(T2 - T1),\ (VT(T2) - VT(T1))\ *8\ /\ (T2 - T1)).$$

Le premier terme prévaut typiquement lorsque la charge du lien est faible car le flot fictif aurait utilisé toute la capacité du lien restant disponible. Le deuxième terme prévaut en période d'occupation et mesure approximativement le débit réalisé par un flot réel qui a toujours au moins un paquet dans la file.

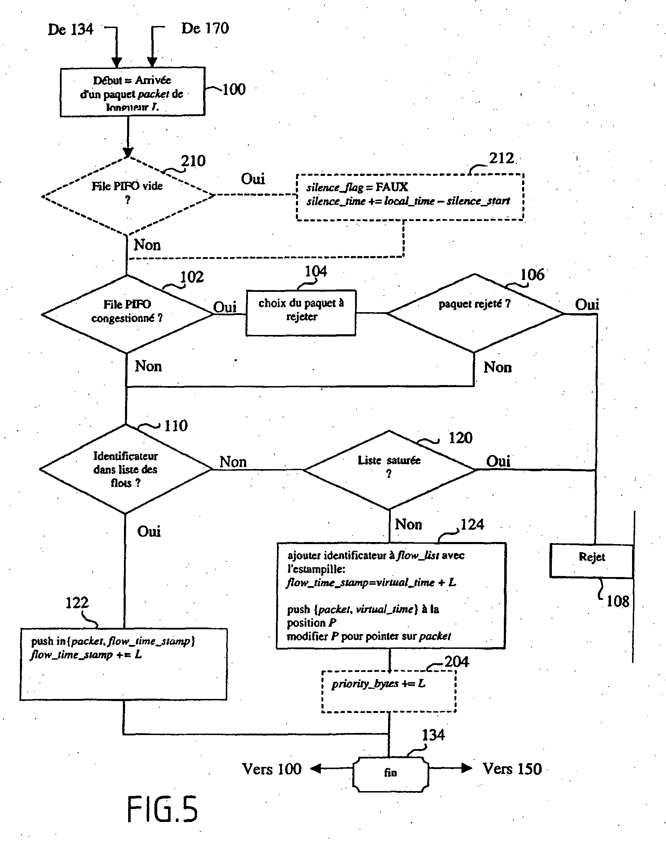

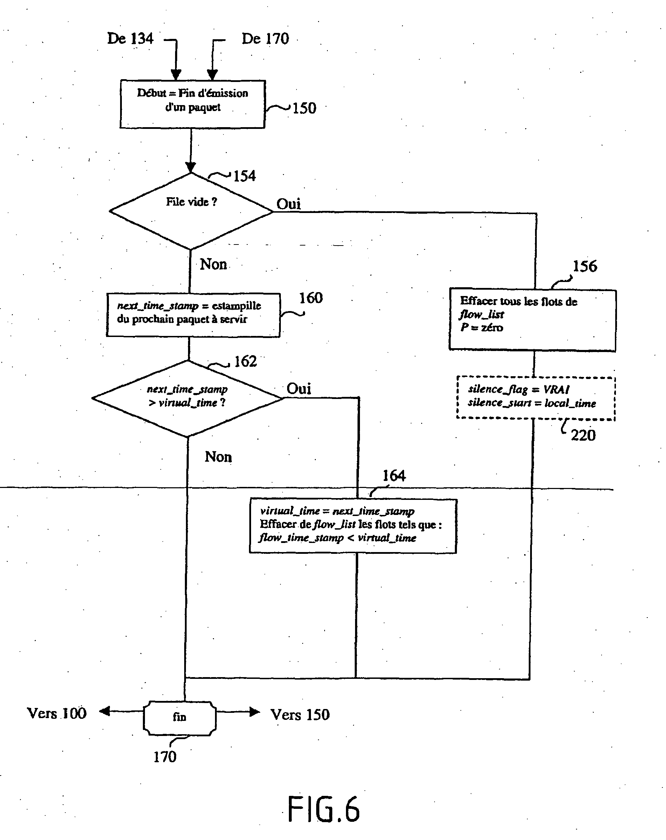

Les opérations de l'algorithme s'exécutent soit à l'arrivée d'un paquet, soit à la fin d'une émission de paquet comme illustré en figures 5 et 6. Dans ces figures, les opérations encadrées par des lignes en pointillés s'afférent aux mesures de congestion et sont commentées plus loin.

Sur la figure 5, le début de l'algorithme correspond à l'étape d'arrivée d'un paquet (étape 100).

Il est d'abord déterminé (étape 102) si la file PIFO est congestionnée, ou pas.

Si elle l'est, il est procédé au choix du paquet à éventuellement rejeter (étape 104).

Le paquet peut être rejeté (étapes 106 et 108) ou pas, auquel cas (un paquet d'un autre flot est alors rejeté), il est procédé au test de l'étape 110, de même que si la réponse à l'étape 102 est négative.

L'étape 110 est un test sur l'appartenance de l'identificateur du paquet à la liste des flots.

Si l'identificateur de flot du paquet n'appartient pas à la liste des flots, c'est que le flot auquel appartient ce paquet n'est pas actif. Ce type de paquet obtient une priorité, dans le cas où la liste des flots *(flow_list)* n'est pas saturée. Si cette dernière l'est (étape 120), il est procédé au rejet du paquet, (étape 108). Sinon, la liste *(flow_list),* est mise à jour en rajoutant l'identificateur du nouveau flot avec une estampille de flot *flow_time_stamp* égale à *virtual_time* augmenté de la longueur du paquet $L$ (étape 124). Le paquet est inséré dans la file PIFO à la position indiquée par le pointeur $P$ et la valeur de ce dernier est mise à jour (étape 124).

Si le flot appartient déjà à la liste des flots actifs (réponse positive à l'étape 110), le paquet est inséré à la file PIFO avec une estampille égale à la valeur courante de *flow_time_stamp* (étape 122). Cette valeur dans *flow_list* est alors incrémentée par la longueur $L$ du paquet.

L'algorithme est alors terminé (étape 134). L'arrivée d'un nouveau paquet redéclenchera le même algorithme. La fin d'admission d'un paquet déclenchera l'algorithme suivant (figure 6).

Les opérations encadrées en pointillés permettent de mesurer en continu les paramètres de congestion débit équitable et charge prioritaire. Si la file PIFO est vide (étape 210), on observe la fin d'une période de silence. Le compteur de durée de silence *silence_time* est mis à jour et l'indicateur logique *silence_flag* est mis à la valeur FAUX (étape 212). Par ailleurs, lorsqu'un nouveau flot est ajouté à la liste *flow_list,* la valeur de priority_bytes est incrémentée par la longueur du paquet en question (étape 204).

L'algorithme de la figure 6 est déclenché par un autre événement, à savoir la fin d'émission d'un paquet (étape 150).

Dans une première étape (étape 154), il est déterminé si la file PIFO est vide ou pas.

Si oui, tous les flots encore actifs sont effacés de la liste *flow_list* (étape 156). Le pointeur *P* est réinitialisé.

Si non, on procède à l'émission du prochain paquet en notant la valeur de son estampille *next_time_stamp* (étape 160). Si *next_time_stamp* n'est pas supérieur à *virtual_time* (ces variables sont donc de valeurs égales), l'algorithme est terminé. Dans le cas contraire, il y a lieu de changer *virtual_time* et de procéder à l'effacement de flow_list des flots devenus inactifs, leur *flow_time_stamp* étant inférieur à *virtual_time* (étape 164). L'algorithme est alors terminé.

Les opérations liées aux mesures de congestion sont encadrées en pointillés. Lorsque la file se vide, l'indicateur *silence_flag* est mis à la valeur VRAI l'époque du début de la période de silence est enregistrée (étape 220).

L'arrivée d'un nouveau paquet déclenchera l'algorithme précédent (figure 5), la fin d'émission d'un paquet déclenchera de nouveau l'algorithme de la figure 6.

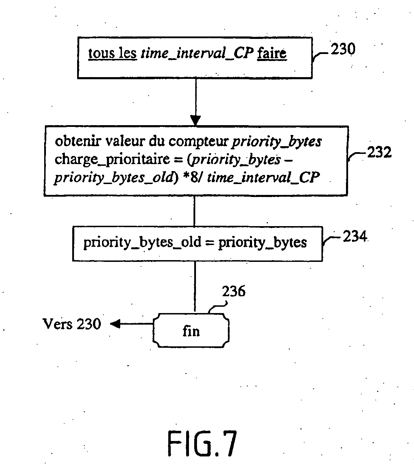

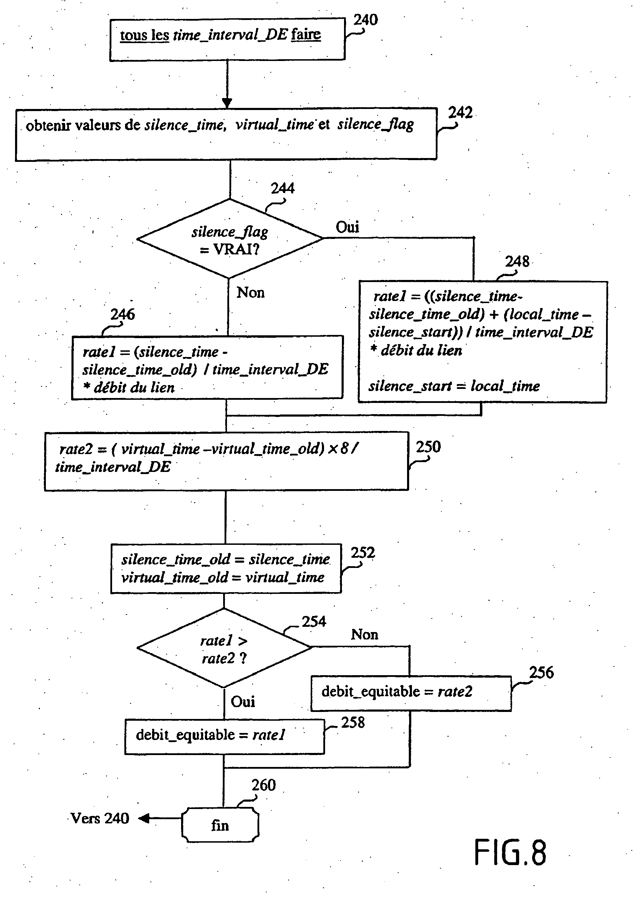

Les figures 7 et 8 indiquent les opérations effectuées lors de l'échantillonnage des compteurs de congestion.

Les opérations de la figure 7 sont exécutées toutes les *time_interval_CP* secondes (selon l'horloge local). On calcule la charge prioritaire (étape 232) et on stocke la valeur courante du compteur *priority_bytes* pour la prochaine exécution comme la variable *priority_bytes_old*

Les opérations de la figure 8 sont exécutées toutes les *time_interval_DE* secondes (selon l'horloge local). Les calculs diffèrent selon que le lien est silent (file d'attente vide) ou non. Si oui, le silence est interrompu pour les besoins des calculs (étape 248). Dans tous les cas on obtient une estimation *rate_1* du débit équitable correspondant au débit disponible pendant l'intervalle de mesure (étape 246 ou 248). On calcule ensuite le deuxième estimateur de débit rate_2 selon la formule de l'étape 250. Le débit équitable est le plus grand des deux estimateurs rate_1 et rate_2 (étapes 254, 256 et 258). Enfin, les valeurs actuels de *silence_time* et *virtual_time* sont mémorisées pour le prochain intervalle (étape 252).

Une autre application calcule des moyennes glissantes à partir des valeurs exportées à la fin de chaque période de mesure. Le choix des poids de lissage et de la longueur des intervalles de mesures est à optimiser en fonction des paramètres du système et du trafic. Cette application fournit les estimateurs débit équitable et charge prioritaire et déduit la valeur de la fonction *Admit* déjà introduite ci-dessus.

Le choix du paquet à rejeter à l'étape 104 de la figure 5 se fait en assurant l'équité du partage de débit entre les flots actifs. Celle-ci est assurée en choisissant pour rejet un paquet du flot dont le nombre total d'octets en attente est le plus grand. Des conditions de rejet ainsi qu'un mécanisme du choix du paquet à rejeter sont par exemple divulguées dans l'article de B. Suter et al. « Buffer Management schemes for supporting TCP in Gigabit Routers with Per-Flow Queuing », IEEE J. in Selected Areas in Communications, August 1999. Notons enfin, que le rejet de paquet pourrait être remplacé dans certains cas par un simple marquage avec l'utilisation du bit ECN (« explicit congestion notification ») de l'entête IP.

Le procédé selon l'invention est extensible : il fonctionne quelles que soient les conditions de charge, par exemple sur un lien à 1Mbit/s ou à 10Mbit/s ou 1Gbit/s ou plus.

La complexité du mécanisme d'ordonnancement et notamment du SFQ, est linéaire dans le nombre de flots actifs. L'extensibilité est assurée par te fait que ce nombre est limité par le contrôle d'admission et reste relativement faible, indépendamment du débit du lien C.

Pour estimer ce nombre, supposons d'abord que le contrôle d'admission fonctionne parfaitement et assure que le débit équitable ne descende jamais en dessous d'une valeur cible $\Theta$. Le nombre de flots dont le débit pourrait dépasser $\Theta$ (car non limité par d'autres éléments sur leur chemin) est forcément inférieur ou égal à $C/\Theta$ : On choisit $\Theta$ tel que la probabilité d'avoir plus que $C/\Theta$ flots actifs soit très faible tant que la charge ne dépasse pas une certaine limite. Pour une limite de charge de 90%, d'après l'analyse de Ben Fredj et al. (« Statistical Bandwidth Sharing: a study of congestion at flow levels » Proc. of ACM SIGCOMM 2001), la probabilité que le nombre de flots dépasse 100 est plus faible que 1/10000. On peut donc fixer $\Theta = C/100$ de sorte que le nombre de flots actifs est toujours inférieur à 100, et la probabilité de blocage est inférieure à $10^{-4}$ si la charge ne dépasse pas 90%.

Un grand nombre d'autres flots de débit inférieur à $\Theta$ peuvent être en cours. Cependant, à tout instant, seulement un petit nombre parmi ces flots auront un paquet dans la file d'attente. Supposons pour simplifier que les paquets de tous les flots soient de même longueur. Ces flots n'ont jamais qu'un seul paquet dans la file d'attente (puisque leur débit est inférieur au débit équitable). Si les flots sont indépendants, le nombre de paquets dans la file prioritaire se comporte alors comme une file d'attente M/D/1. De même, le nombre de flots actifs (qui sont inventoriés dans la liste des flots de l'algorithme partage équitable) est égal au nombre de clients participant à une période d'occupation de la même file d'attente. Ce dernier est inférieur à 100 avec une grande probabilité tant que la charge ne dépasse pas 90%.

L'impact de la taille variable des paquets et de la gigue acquise dans le réseau en amont ne changent pas le fait que le nombre de flots à prendre en compte dans des conditions normales de charge reste inférieur à quelques centaines (200 si on somme les limites ci-dessus). En cas de surcharge, le contrôle d'admission a justement pour rôle de limiter le nombre de flots en cours. Le contrôle du débit équitable limite naturellement le nombre de flots actifs. Le contrôle de la charge prioritaire assure que la charge locale due aux flots de débit plus faible que le débit équitable reste en dessous de la limite fixée (90%, par exemple) avec une grande probabilité.

La valeur optimale du nombre maximal de flots, en tenant compte de l'imprécision des algorithmes de contrôle d'admission, peut être déterminée en expérimentant les algorithmes décrits ci-dessus.

Si le dispositif est employé sans contrôle d'admission, le nombre de flots à prendre en compte n'est pas limité. Ce fait pourrait ne pas être gênant dans le cadre d'un réseau d'accès où le nombre d'utilisateurs desservi est lui-même limité.

Une discrimination pourrait être souhaitable pour distinguer des classes de service au niveau du contrôle d'admission. Il est en effet possible de refuser certaines classes de flots à un certain niveau de congestion afin de préserver de la capacité pour d'autres flots d'une classe de service plus prioritaire. La priorité pourrait par exemple dépendre de la valeur de différents champs de l'entête du paquet, dont la classe de trafic de Ipv6 ou le champs ToS de IPv4 ou les adresses IP.

On suppose donc qu'il existe un ensemble de fonctions logiques *Admit-i* (débit équitable, charge prioritaire), i = 1,..., m, pour m classes de service. La classe i est prioritaire par rapport à la classe j si i < j. Les fonctions sont telles que, pour les mêmes arguments, $Admit\_1 \geq Admit\_2 \geq ... \geq Admit\_m.$ La politique d'admission est alors de rejeter les flots de classe d'index i si Admit_i vaut 0 et de les admettre si $Admit\_i$ vaut 1.

$Admit\_1$ est choisie, comme la fonction *Admit* dans la politique simple sans classes, pour préserver la transparence des flots de débit crête inférieur aux débits cibles respectifs. Les autres fonctions, $Admit\_1$ pour i=2,...,m, permettent de privilégier l'accessibilité des classes prioritaires.

Les limitations de débit crête ne sont pas « dures », en ce sens que les usagers peuvent les dépasser sans problème si les conditions de trafic le permettent. Il s'agit d'une hypothèse permettant le dimensionnement et l'établissement des conditions précises d'admission. Les garanties affichées par l'opérateur permettent aux usagers d'utiliser un codage non adaptatif pour les services temps réel tant que son débit crête est inférieur à la limite fixée. Le débit des transferts de données n'est restreint par le réseau que si les limites externes (réseau d'accès, capacité du serveur.....) sont supérieures au débit crête cible.

L'architecture selon l'invention n'est pas plus vulnérable aux comportements irrationnels ou mal intentionnés de la part des utilisateurs que les architectures connues de l'état de la technique. Cependant, pour une performance optimale, une interprétation appropriée, par les applications, des signaux implicites constitués par la perte de paquets, est préférable.

La perte des premiers paquets d'un nouveau flot devrait être interprétée comme le rejet de ce dernier. L'application sous-jacente pourrait continuer à émettre des paquets jusqu'à l'acceptation de l'un d'eux et l'inscription du flot dans la liste de flots protégés. Ces ré-émissions ne sont pas plus nuisibles que le renouvellement de paquets perdus par TCP. La possibilité de routage adaptatif évoquée ci-dessus, permet une réaction plus intelligente. Si les premiers paquets sont perdus, le changement de l'identificateur du flot dans les paquets suivants permet de tester un autre chemin.

Les applications temps réel peuvent émettre des paquets de test pour évaluer la disponibilité d'un chemin. L'acquittement d'un paquet de test est une bonne indication que le flot est accepté et inscrit à la liste de flots protégés. Il n'y a pas besoin d'autres mécanismes spécifiques au traitement des paquets de test.

Pour la plupart des communications, deux flots sont établis, un dans chaque direction. Les utilisateurs pourraient avoir avantage à adopter la convention selon laquelle la partie libre de l'identificateur (le flot label en IPv6 ou les numéros de port en IPv4) est la même dans les deux sens. Ceci permettrait aux utilisateurs de reconnaître les acquittements d'un flot particulier, notamment dans le cas d'un routage par inondation : l'utilisateur envoie plusieurs paquets avec des identificateurs différents permettant de tester plusieurs chemins; la communication se poursuit sur le flot qui est acquitté en premier.

L'architecture n'introduit pas de nouvelles opportunités pour une 20 attaque de type « DoS » (« denial of service »). Deux types de comportement peuvent être envisagés:

- un utilisateur change l'identificateur de flot avec chaque paquet : ceci pourrait rapidement saturer une liste de flots protégés; la conséquence serait la non-protection de certains flots mais ceux-ci n'en souffriraient qu'en cas de congestion simultanée du lien sous attaque; l'inscription d'un flot sur la liste 30, avec seulement une faible probabilité p, réduit l'impact d'une telle attaque.

- un utilisateur préserve le même identificateur pour plusieurs flots : les flots successifs ne seront pas soumis au contrôle d'admission tant que l'intervalle entre deux paquets reste inférieur à la temporisation les flots émis en parallèle ne pourront réaliser un débit global plus fort que la valeur courante du débit équitable ; la gêne occasionnée aux autres utilisateurs est minime dans les deux cas.

Enfin, il est bien entendu possible pour un utilisateur d'établir plusieurs flots pour le transport d'une même application. Il pourrait alors obtenir un débit plus fort, à condition que son débit crête le permette.

Pour réaliser l'équilibrage de charge sur des chemins à coût égal, la plupart des routeurs actuels appliquent une fonction de hash aux adresses IP de source et/ou de destination afin de choisir l'interface de sortie pour un paquet donné. Tous les paquets d'un même flot suivent ainsi le même chemin. On peut étendre l'argument de la fonction hash pour inclure également la partie libre de l'identificateur de flot (c'est-à-dire, le flow label en IPv6 ou les numéros de port en IPv4). Ainsi, le choix de route dépend d'une valeur précisée par l'utilisateur. En cas d'échec sur une route, l'utilisateur est libre de changer l'identificateur et de réessayer. Au bout d'une ou de plusieurs tentatives, il pourrait trouver une route avec suffisamment de capacité. Il pourrait même initier plusieurs flots simultanément et ne continuer la communication que sur l'un d'eux - celui pour lequel on reçoit en premier un acquittement, par exemple.

Les éléments de réseau mettant en oeuvre l'architecture selon l'invention pourront identifier les flots, par exemple par une fonction (de type « hash ») des attributs d'adresse. De préférence, le choix de cette fonction permet un compromis entre la complexité de mise en oeuvre et la probabilité de confusion entre deux flots pour lesquels la fonction renvoie la même valeur. Les effets d'une telle confusion sont limités : évitement éventuel d'un blocage par le contrôle d'admission, réduction du débit attribué aux flots par le fair queuing.

Selon l'invention, un mécanisme de partage de charge est utilisé pour réaliser un acheminement adaptatif à partir de l'identifiant des flots. En effet, le contrôle d'admission refuse les flots qui arrivent lorsque le lien est en congestion en rejetant le premier paquet reçu. Le trafic correspondant n'est pas perdu pour autant si l'utilisateur renouvelle sa tentative en réémettant le même paquet jusqu'au succès. La probabilité de succès est plus grande si, à chaque tentative, le paquet est présenté à un autre lien capable de l'acheminer vers sa destination. Cela est réalisable si le mécanisme de partage de charge employé par le routeur agit sur l'identificateur de flot et si celui-ci comporte un champ rempli librement par l'utilisateur (par exemple, un numéro de port en IPv4, le « flow label » en IPv6). La fonction de « hash » réalisant le partage de charge inclut comme argument ce champ libre de sorte que l'utilisateur réalise une forme de routage adaptatif en modifiant la valeur du champ en question à chaque renouvellement.

## Revendications

1. Dispositif de traitement de paquets (20) de flots sur un lien de réseau permettant d'assurer une qualité de service sans explicitement distinguer entre flots temps réel et flots de données et comportant des moyens d'ordonnancement (28) pour ordonner les paquets dans une file d'attente (50) selon un algorithme de partage équitable avec priorité, ledit dispositif étant **caractérisé en ce qu'**une priorité est affectée aux paquets desdits flots dont le débit est inférieur à un seuil dynamique, ledit seuil étant déterminé par des conditions de trafic.

2. Dispositif selon la revendication 1, comportant en outre des moyens (24) de contrôle d'admission pour contrôler l'admission desdits paquets dans le dispositif, selon des critères dits critères d'admission.

3. Dispositif selon la revendication 2, les moyens d'ordonnancement (28) envoyant aux moyens (24) de contrôle d'admission des données (36) de conditions d'admissibilité.

4. Dispositif selon l'une des revendications 2 ou 3, les moyens de contrôle d'admission comportant des moyens pour interroger, pour chaque paquet entrant (20), une liste (30) de flots dits protégés.

5. Dispositif selon la revendication 4, comportant également des moyens pour effacer de la liste (30) de flots protégés les flots pour lesquels le temps écoulé depuis le dernier paquet reçu dépasse une valeur seuil.

6. Dispositif selon la revendication 4 ou 5, les moyens (24) de contrôle d'admission comportant des moyens pour déterminer, lorsqu' un paquet appartient à un flot qui n'est pas dans la liste des flots protégés, si les critères d'admission sont satisfaits.

7. Dispositif selon l'une des revendications 4 à 6, comportant des moyens pour inscrire dans la liste (30) un nouveau flot si les critères d'admission sont satisfaits.

8. Dispositif selon l'une des revendications 3 à 7, les données (36) de conditions d'admissibilité comportant :

   - une valeur de débit, dit débit équitable et qui est une mesure du débit que réaliserait un flot de données qui aurait toujours des paquets à émettre,
   - une valeur de charge prioritaire, qui est la somme de la longueur des paquets prioritaires, transmis dans un certain intervalle, divisée par la durée de cet intervalle.

9. Dispositif selon l'une des revendications 1 à 8, les moyens d'ordonnancement ordonnant comme prioritaires, dans la file d'attente (50), les paquets des flots qui ne sont pas inscrits dans une liste des flots actifs et, comme non prioritaires, les paquets des flots qui sont déjà inscrits dans cette liste.

**10.** Dispositif selon l'une des revendications 1 à 9, les moyens d'ordonnancement (28) ordonnant les paquets dans une file d'attente (50) de type PIFO.

**11.** Dispositif selon la revendication 10, un pointeur P identifiant le dernier des paquets prioritaires à la tête de la file (50).

**12.** Dispositif selon la revendication 11, mettant en outre en oeuvre une liste de flots actifs contenant l'identificateur de flots dits actifs, une estampille permettant l'ordonnancement des paquets.

**13.** Dispositif selon la revendication 11, comprenant en outre des moyens pour inscrire et pour supprimer les flots de la liste des flots actifs en fonction de l'arrivée et du départ des paquets des différents flots.

**14.** Dispositif selon la revendication 12 ou 13, comportant en outre des moyens de mesure de congestion.

**15.** Dispositif selon la revendication 14, les mesures de congestion étant réalisées en fonction d'une donnée de temps actuel, d'un nombre d'octets de paquets prioritaires transmis pendant un intervalle de mesure courant, et d'un nombre d'octets qu'auraient pu émettre un flot fictif dans ledit intervalle de mesure courant.

**16.** Dispositif selon l'une des revendications 10 à 15, comportant des moyens pour déterminer si la file (50) PIFO est vide, ou pas.

**17.** Dispositif selon l'une des revendications précédentes, comportant en outre des moyens de discrimination pour distinguer des classes de service au niveau du contrôle d'admission.

**18.** Dispositif selon l'une quelconque des revendications précédentes, dans lequel les flots sont identifiés par une fonction, de type « hash » , d'attributs d'adresse.

**19.** Procédé de traitement de paquets (20) de flots sur un lien de réseau permettant d'assurer une qualité de service sans explicitement distinguer entre flots temps réel et flots de données, comportant une étape d'ordonnancement, pour ordonner les paquets admis dans une file d'attente (50) selon un algorithme de partage équitable avec priorité, ledit procédé étant **caractérisé en ce qu'**une priorité est affectée aux paquets desdits flots dont le débit est inférieur à un seuil dynamique, ledit seuil étant déterminé par des conditions de trafic.

**20.** Procédé selon la revendication 19, comportant en outre une étape de contrôle d'admission pour contrôler l'admission desdits paquets dans un dispositif de traitement desdits paquets (20), selon des critères dits critères d'admission.

**21.** Procédé selon la revendication 20, comportant en outre un envoi aux moyens (24) de contrôle d'admission des données (36) de conditions d'admissibilité.

**22.** Procédé selon la revendication 21, l'étape de contrôle d'admission comportant une interrogation, pour chaque paquet entrant (20), d'une liste (30) de flots dits protégés.

**23.** Procédé selon la revendication 22, les flots pour lesquels le temps écoulé depuis le dernier paquet reçu dépasse une valeur seuil étant effacés de la liste (30) de flots protégés.

**24.** Procédé selon la revendication 22 ou 23, comportant, lorsqu'un paquet appartient à un flot qui n'est pas dans la liste des flots protégés, une étape pour déterminer si les critères d'admission sont satisfaits.

**25.** Procédé selon l'une des revendications 22 à 24, comportant une étape d'inscription dans la liste (30) d'un nouveau flot si les critères d'admission sont satisfaits.

**26.** Procédé selon l'une des revendications 21 à 25, les données de conditions d'admissibilité comportant :

- une valeur de débit, dit débit équitable et qui est une mesure du débit que réaliserait un flot de données qui aurait toujours des paquets à émettre,
- une valeur de charge prioritaire, qui est la somme de la longueur des paquets prioritaires, transmis dans un certain intervalle, divisée par la durée de cet intervalle.

**27.** Procédé selon l'une des revendications 20 à 26, l'étape d'ordonnancement ordonnant comme prioritaires, dans la file d'attente (50), les paquets des flots qui ne sont pas inscrits dans une liste des flots actifs et, comme non prioritaires, les paquets des flots qui sont déjà inscrits dans cette liste.

28. Procédé selon l'une des revendications 20 à 26, les moyens d'ordonnancement ordonnant les paquets dans une file d'attente (50) de type PIFO.

29. Procédé selon la revendication 28, un pointeur P identifiant le dernier des paquets prioritaires à la tête de la file.

30. Procédé selon la revendication 29, mettant en outre en oeuvre une liste de flots actifs contenant l'identificateur des flots, une estampille permettant l'ordonnancement des paquets.

31. Procédé selon la revendication 30, comprenant en outre des étapes d'inscription et de suppression des flots de la liste des flots actifs en fonction de l'arrivée et du départ des paquets des différents flots.

32. Procédé selon la revendication 30 ou 31, comportant en outre une mesure de congestion.

33. Procédé selon la revendication 32, les mesures de congestion étant réalisées en fonction d'une donnée de temps actuel, d'un nombre d'octets de paquets prioritaires transmis pendant un intervalle de mesure courant, et d'un nombre d'octets qu'auraient pu émettre un flot fictif dans ledit intervalle de mesure courant.

34. Procédé selon l'une des revendications 28 à 33, comportant une étape pour déterminer si la file PIFO (50) est vide, ou pas.

35. Procédé selon l'une des revendications 19 à 34, un signal relatif à la perte de paquets étant envoyé à un utilisateur.

36. Procédé selon l'une des revendications 19 à 34, comportant en outre une discrimination entre des classes de service au niveau du contrôle d'admission.

37. Procédé selon l'une des revendications 19 à 36, dans lequel le partage de charge des flots sur plusieurs liens est effectué à l'aide d'une fonction des attributs d'adresse incluant la partie libre de l'identificateur de flots.

**Claims**

1. Device for processing packets (20) of flows over a network link making it possible to ensure a quality of service without explicitly distinguishing between real-time flows and data flows and comprising scheduling means (28) for scheduling the packets in a queue (50) according to a fair queuing algorithm with priority, said device being **characterized in that** a priority is assigned to the packets of said flows for which the bit rate is below a dynamic threshold, said threshold being determined by traffic conditions.

2. Device according to Claim 1, also comprising admission control means (24) for controlling the admission of said packets into the device, according to criteria called admission criteria.

3. Device according to Claim 2, the scheduling means (28) sending to the admission control means (24) admissibility condition data (36).

4. Device according to one of Claims 2 or 3, the admission control means comprising means for interrogating, for each incoming packet (20), a list (30) of so-called protected flows.

5. Device according to Claim 4, also comprising means for erasing from the list (30) of protected flows, the flows for which the elapsed time since the last packet was received exceeds a threshold value.

6. Device according to Claim 4 or 5, the admission control means (24) comprising means for determining, when a packet belongs to a flow that is not in the list of protected flows, if the admission criteria are satisfied.

7. Device according to one of Claims 4 to 6, comprising means for entering into the list (30) a new flow if the admission criteria are satisfied.

8. Device according to one of Claims 3 to 7, the admissibility condition data (36) comprising:

   - a bit rate value, called fair bit rate, and which is a measurement of the bit rate achieved by a data flow that always had packets to be sent,
   - a priority load value, which is the sum of the lengths of the priority packets, transmitted within a certain interval, divided by the duration of that interval.

9. Device according to one of Claims 1 to 8, the scheduling means scheduling as priority, in the queue (50), the packets of the flows that are not entered in a list of active flows and, as non-priority, the packets of the flows that are already entered in this list.

10. Device according to one of Claims 1 to 9, the scheduling means (28) scheduling the packets in a PIFO type queue (50).

11. Device according to Claim, 10, a pointer P identifying the last of the priority packets at the of the queue (50).

12. Device according to Claim 11, also implementing a list of active flows containing the identifier of so-called active flows, a stamp making it possible to schedule the packets.

13. Device according to Claim 11, also comprising means for entering and for deleting flows in the list of active flows according to the arrival and departure of the packets of the different flows.

14. Device according to Claim 12 or 13, also comprising congestion measurement means.

15. Device according to Claim 14, the congestion measurements being carried out according to a current time datum, a number of priority packet bytes transmitted during a current measurement interval and a number of bytes that a dummy flow could have sent in said current measurement interval.

16. Device according to one of Claims 10 to 15, comprising means for determining whether the PIFO queue (50) is empty or not.

17. Device according to one of the preceding claims, also comprising discrimination means for distinguishing classes of service at admission control level.

18. Device according to any one of the preceding claims, in which the flows are identified by a "hash" type address attributes function.

19. Method of processing packets (20) of flows over a network link making it possible to ensure a quality of service without explicitly distinguishing between real-time flows and data flows, comprising a scheduling step, for scheduling the packets admitted into a queue (50) according to an fair queuing algorithm with priority, said method being **characterized in that** a priority is assigned to the packets of said flows for which the bit rate is below a dynamic threshold, said threshold being determined by traffic conditions.

20. Method according to Claim 19, also comprising an admission control step for controlling the admission of said packets into a device for processing said packets (20), according to criteria called admission criteria.

21. Method according to Claim 20, also comprising a transmittal to the admission control means (24) of admissibility condition data (36).

22. Method according to Claim 21, the admission control step comprising an interrogation, for each incoming packet (20), of a list (30) of so-called protected flows.

23. Method according to Claim 22, the flows for which the elapsed time since the last packet was received exceeds a threshold value being erased from the list (30) of protected flows.

24. Method according to Claim 22 or 23, comprising, when a packet belongs to a flow that is not in the list of protected flows, a step for determining whether the admission criteria are satisfied.

25. Method according to one of Claims 22 to 24, comprising a step for entering into the list (30) a new flow if the admission criteria are satisfied.

26. Method according to one of Claims 21 to 25, the admissibility condition data comprising:

    - a bit rate value, called fair bit rate and which is a measurement of the bit rate that a data flow that always had packets to be sent would achieve,
    - a priority load value, which is the sum of the lengths of the priority packets, transmitted in a certain interval, divided by the duration of that interval.

27. Method according to one of Claims 20 to 26, the scheduling step scheduling as priority, in the queue (50), the packets of the flows that are not entered in a list of active flows and as non-priority, the packets of the flows that are already entered in this list.

28. Method according to one of Claims 20 to 26, the scheduling means scheduling the packets in a PIFO type queue (50).

29. Method according to Claim 28, a pointer P identifying the last of the priority packets at the head of the queue.

30. Method according to Claim 29, also implementing a list of active flows containing the identifier of the flows, a stamp making it possible to schedule the packets.

31. Method according to Claim 30, also comprising steps for entering and deleting flows in the list of active flows according to the arrival and departure of the packets of the different flows.

32. Method according to Claim 30 or 31, also comprising a congestion measurement.

33. Method according to Claim 32, the congestion measurements being carried out according to a current time datum, a number of octets of priority packets transmitted during a current measurement interval and a number of octets that a dummy flow could have sent in said current measurement interval.

34. Method according to one of Claims 28 to 33, comprising a step for determining whether the PIFO queue (50) is empty or not.

35. Method according to one of Claims 19 to 34, a signal relating to the loss of the packets being sent to a user.

36. Method according to one of Claims 19 to 34, also comprising a discrimination between classes of service at admission control level.

37. Method according to one of Claims 19 to 36, in which the load sharing of the flows over multiple links is performed using a function of the address attributes including the free part of the flow identifier.


**Patentansprüche**

1. Vorrichtung zur Verarbeitung von Paketen (20) von Flüssen auf einem Netz-Link, die es ermöglicht, eine Dienstqualität zu gewährleisten, ohne explizit zwischen Echtzeitflüssen und Datenflüssen zu unterscheiden, und die Zeitablaufssteuerungsmittel (28) aufweist, um die Pakete in einer Warteschlange (50) gemäß einem Algorithmus zum fairen Einreihen mit Priorität anzuordnen, wobei die Vorrichtung **dadurch gekennzeichnet ist, dass** den Paketen derjenigen Flüsse eine Priorität zugeteilt wird, deren Durchsatz unter einem dynamischen Schwellwert liegt, wobei der Schwellwert von Verkehrsbedingungen bestimmt wird.

2. Vorrichtung nach Anspruch 1, die weiter Zugangskontrollmittel (24) aufweist, um den Zugang der Pakete in die Vorrichtung gemäß so genannten Zugangskriterien zu kontrollieren.

3. Vorrichtung nach Anspruch 2, wobei die Zeitablaufssteuerungsmittel (28) an die Zugangskontrollmittel (24) Daten (36) von Zulässigkeitsbedingungen senden.

4. Vorrichtung nach einem der Ansprüche 2 oder 3, wobei die Zugangskontrollmittel Mittel aufweisen, um für jedes eingehende Paket (20) eine Liste (30) von so genannten geschützten Flüssen abzufragen.

**5.** Vorrichtung nach Anspruch 4, die ebenfalls Mittel aufweist, um Flüsse aus der Liste (30) der geschützten Flüsse zu entfernen, bei denen die seit dem letzten empfangenen Paket vergangene Zeit einen Schwellwert übersteigt.

**6.** Vorrichtung nach Anspruch 4 oder 5, wobei die Zugangskontrollmittel (24) Mittel aufweisen, um, wenn ein Paket zu einem Fluss gehört, der sich nicht in der Liste der geschützten Flüsse befindet, zu bestimmen, ob die Zugangskriterien erfüllt sind.

**7.** Vorrichtung nach einem der Ansprüche 4 bis 6, die Mittel aufweist, um einen neuen Fluss in die Liste (30) einzuschreiben, wenn die Zugangskriterien erfüllt sind.

**8.** Vorrichtung nach einem der Ansprüche 3 bis 7, wobei die Daten (36) von Zulässigkeitsbedingungen aufweisen:

- einen Durchsatzwert, fairer Wert genannt, der ein Maß des Durchsatzes ist, den ein Datenfluss herstellen würde, der immer zu sendende Pakete hätte,
- einen prioritären Lastwert, der die Summe der Länge der in einem bestimmten Zeitintervall übertragenen prioritären Pakete dividiert durch die Dauer dieses Zeitintervalls ist.

**9.** Vorrichtung nach einem der Ansprüche 1 bis 8, wobei die Zeitablaufssteuerungsmittel die Pakete der Flüsse als prioritär in der Warteschlange (50) einordnen, die nicht in eine Liste der aktiven Flüsse eingetragen sind, und als nicht-prioritär die Pakete der Flüsse, die bereits in diese Liste eingetragen sind.

**10.** Vorrichtung nach einem der Ansprüche 1 bis 9, wobei die Zeitablaufssteuerungsmittel (28) die Pakete in einer Warteschlange (50) vom Typ PIFO einordnen.

**11.** Vorrichtung nach Anspruch 10, wobei ein Zeiger P das letzte der prioritären Pakete am Kopf der Schlange (50) identifiziert.

**12.** Vorrichtung nach Anspruch 11, die weiter eine Liste von aktiven Flüssen anwendet, die die Kennung von so genannten aktiven Flüssen enthält, wobei ein Zeitstempel die Zeitablaufssteuerung der Pakete ermöglicht.

**13.** Vorrichtung nach Anspruch 11, die weiter Mittel aufweist, um die Flüsse in die Liste der aktiven Flüsse einzutragen und aus ihr zu löschen in Abhängigkeit von der Ankunft und dem Abgang der Pakete der verschiedenen Flüsse.

**14.** Vorrichtung nach Anspruch 12 oder 13, die weiter Staumessmittel aufweist.

**15.** Vorrichtung nach Anspruch 14, wobei die Staumessungen in Abhängigkeit von einem aktuellen Zeitdatenwert, einer Anzahl von Bytes von prioritären Paketen, die während eines laufenden Messintervalls übertragen werden, und einer Anzahl von Bytes durchgeführt werden, die ein fiktiver Fluss in dem laufenden Messintervall hätten senden können.

**16.** Vorrichtung nach einem der Ansprüche 10 bis 15, die Mittel aufweist, um zu bestimmen, ob die PIFO-Schlange (50) leer ist oder nicht.

**17.** Vorrichtung nach einem der vorhergehenden Ansprüche, die außerdem Unterscheidungsmittel aufweist, um in Höhe der Zugangskontrolle Dienstklassen zu unterscheiden.

**18.** Vorrichtung nach einem der vorhergehenden Ansprüche, bei der die Flüsse durch eine Funktion vom Typ "Hash" von Adressenattributen identifiziert werden.

**19.** Verfahren zur Verarbeitung von Paketen (20) von Flüssen auf einem Netz-Link, das es ermöglicht, eine Dienstqualität zu gewährleisten, ohne explizit zwischen Echtzeitflüssen und Datenflüssen zu unterscheiden, das einen Schritt der Zeitablaufssteuerung aufweist, um die zugelassenen Pakete in eine Warteschlange (50) gemäß einem Algorithmus zum fairen Einreihen mit Priorität einzuordnen, wobei das Verfahren **dadurch gekennzeichnet ist, dass** den Paketen derjenigen Flüsse eine Priorität zugeteilt wird, deren Durchsatz unter einem dynamischen Schwellwert liegt, wobei der Schwellwert durch Verkehrsbedingungen bestimmt wird.

**20.** Verfahren nach Anspruch 19, das weiter einen Zugangskontrollschritt aufweist, um den Zugang der Pakete in eine Verarbeitungsvorrichtung der Pakete (20) gemäß so genannten Zugangskriterien zu kontrollieren.

21. Verfahren nach Anspruch 20 , das außerdem das Senden von Daten (36) von Zulässigkeitsbedingungen an die Zugangskontrollmittel (24) aufweist.

22. Verfahren nach Anspruch 21, wobei der Zugangskontrollschritt für jedes eingehende Paket (20) eine Abfrage einer Liste (30) von so genannten geschützten Flüssen aufweist.

23. Verfahren nach Anspruch 22, wobei die Flüsse, bei denen die seit dem letzten empfangenen Paket vergangene Zeit einen Schwellwert überschreitet, von der Liste (30) der geschützten Flüsse gelöscht werden.

24. Verfahren nach Anspruch 22 oder 23, das, wenn ein Paket zu einem Fluss gehört, der nicht in der Liste der geschützten Flüsse enthalten ist, einen Schritt aufweist, um zu bestimmen, ob die Zugangskriterien erfüllt sind.

25. Verfahren nach einem der Ansprüche 22 bis 24, das einen Schritt des Eintragens eines neuen Flusses in die Liste (30) aufweist, wenn die Zugangskriterien erfüllt sind.

26. Verfahren nach einem der Ansprüche 21 bis 25, wobei die Zulässigkeitsbedingungsdaten aufweisen:

    - einen Durchsatzwert, fairer Wert genannt, der ein Maß des Durchsatzes ist, den ein Datenfluss ausführen würde, der immer zu sendende Pakete hätte,
    - einen prioritären Lastwert, der die Summe der Länge der in einem bestimmten Zeitintervall übertragenen prioritären Pakete dividiert durch die Dauer dieses Zeitintervalls ist.

27. Verfahren nach einem der Ansprüche 20 bis 26, wobei der Zeitablaufssteuerungsschritt die Pakete der Flüsse als prioritär in der Warteschlange (50) einordnet, die nicht in eine Liste der aktiven Flüsse eingetragen sind, und als nicht-prioritär die Pakete der Flüsse, die bereits in diese Liste eingetragen sind.

28. Verfahren nach einem der Ansprüche 20 bis 26, wobei die Zeitablaufssteuerungsmittel die Pakete in einer Warteschlange (50) vom Typ PIFO einordnen.

29. Verfahren nach Anspruch 28, wobei ein Zeiger P das letzte der prioritären Pakete am Kopf der Schlange identifiziert.

30. Verfahren nach Anspruch 29, das außerdem eine Liste von aktiven Flüssen anwendet, die die Kennung der Flüsse enthält, wobei ein Zeitstempel die Zeitablaufssteuerung der Pakete ermöglicht.

31. Verfahren nach Anspruch 30, das weiter Schritte des Eintragens der Flüsse in und des Löschens der Flüsse aus der Liste der aktiven Flüsse in Abhängigkeit von der Ankunft und dem Abgang der verschiedenen Flüsse aufweist.

32. Verfahren nach Anspruch 30 oder 31, das außerdem eine Staumessung aufweist.

33. Verfahren nach Anspruch 32, wobei die Staumessungen in Abhängigkeit von einem aktuellen Zeitdatenwert, einer Anzahl von Bytes von prioritären Paketen, die während eines laufenden Messintervalls übertragen werden, und einer Anzahl von Bytes durchgeführt werden, die ein fiktiver Fluss in dem laufenden Messintervall hätte senden können.

34. Verfahren nach einem der Ansprüche 28 bis 33, das einen Schritt aufweist, um zu bestimmen, ob die PIFO-Schlange (50) leer ist oder nicht.

35. Verfahren nach einem der Ansprüche 19 bis 34, wobei ein Signal bezüglich des Verlusts von Paketen an einen Benutzer gesendet wird.

36. Verfahren nach einem der Ansprüche 19 bis 34, das weiter eine Unterscheidung zwischen Dienstklassen in Höhe der Zugangskontrolle aufweist.

37. Verfahren nach einem der Ansprüche 19 bis 36, bei dem die Teilung der Flüsse auf mehrere Links mit Hilfe einer Funktion der Adressenattribute erfolgt, die den freien Bereich der Flusskennung einschließt.

FIG.1

FIG.2

Débit
équitable

II

I

T1

T2 — Charge prioritaire

FIG.3

52

50

54

56

FIG.4

De 134      De 170

Début = Arrivée d'un paquet *packet* de longueur *l*.  ~100

File PIFO vide ?  ~210

Oui

silence_flag = FAUX
silence_time += local_time – silence_start  ~212

Non

File PIFO congestionné ?  ~102

Oui

choix du paquet à rejeter  ~104

paquet rejeté ?  ~106

Oui

Non

Non

Identificateur dans liste des flots ?  ~110

Non

Liste saturée ?  ~120

Oui

Oui

Non  ~124

ajouter identificateur à *flow_list* avec l'estampille:
flow_time_stamp=virtual_time + L

push {*packet*, *virtual_time*} à la position *P*
modifier *P* pour pointer sur *packet*

Rejet  ~108

122

push in{*packet*, *flow_time_stamp*}
flow_time_stamp += L

priority_bytes += L  ~204

134

Vers 100 ◄—— fin ——► Vers 150

# FIG.5

De 134 — — De 170

Début = Fin d'émission
d'un paquet ~150

154

File vide ? —— Oui

Non

next_time_stamp = estampille
du prochain paquet à servir 160

Effacer tous les flots de
flow_list
P = zéro 156

162

next_time_stamp
> virtual_time ? —— Oui

silence_flag = VRAI
silence_start = local_time 220

Non

164

virtual_time = next_time_stamp
Effacer de flow_list les flots tels que :
flow_time_stamp < virtual_time

Vers 100 ◄—— fin ——► Vers 150

170

FIG.6

```
  ┌──────────────────────────────────┐
  │  tous les time_interval_CP faire │──230
  └──────────────────────────────────┘
                    │
                    ▼
  ┌──────────────────────────────────────────┐
  │ obtenir valeur du compteur priority_bytes │
  │ charge_prioritaire = (priority_bytes –    │──232
  │ priority_bytes_old) *8/ time_interval_CP  │
  └──────────────────────────────────────────┘
                    │
  ┌──────────────────────────────────────┐
  │ priority_bytes_old = priority_bytes  │──234
  └──────────────────────────────────────┘
                    │
                   236
                    │
  Vers 230 ◄──── ┌──────┐
                 │  fin │
                 └──────┘
```

# FIG.7

```
┌─────────────────────────────────┐  240
│ tous les time_interval_DE faire │
└─────────────────────────────────┘
                 │
                 ▼
┌──────────────────────────────────────────────────────┐  242
│ obtenir valeurs de silence_time, virtual_time et      │
│ silence_flag                                          │
└──────────────────────────────────────────────────────┘
                 │
                 ▼
              244
           ╱────────╲        Oui
          ╱ silence_flag ╲──────────────────┐
          ╲  = VRAI?    ╱                    │
           ╲────────────╱                    │
                 │                           ▼
                Non                      248
                 │         ┌──────────────────────────────────┐
           246   │         │ rate1 = ((silence_time-           │
     ┌───────────┴────────┐│ silence_time_old) + (local_time – │
     │ rate1 = (silence_time -││ silence_start)) / time_interval_DE│
     │ silence_time_old) / time_interval_DE││ * débit du lien │
     │ * débit du lien    ││                                  │
     └────────────────────┘│ silence_start = local_time       │
                 │         └──────────────────────────────────┘
                 │                           │
                 ├───────────────────────────┘
                 ▼
┌──────────────────────────────────────────────────────┐  250
│ rate2 = ( virtual_time –virtual_time_old) × 8 /        │
│ time_interval_DE                                       │
└──────────────────────────────────────────────────────┘
                 │
                 ▼
┌──────────────────────────────────────────┐  252
│ silence_time_old = silence_time           │
│ virtual_time_old = virtual_time           │
└──────────────────────────────────────────┘
                 │
                 ▼
              254
           ╱────────╲        Non
          ╱  rate1 >   ╲──────────────────┐
          ╲  rate2 ?  ╱                    │
           ╲──────────╱                    ▼
                 │              ┌──────────────────────────┐  256
                Oui             │ debit_equitable = rate2  │
                 │              └──────────────────────────┘
                 ▼                         │
     ┌──────────────────────┐  258         │
     │ debit_equitable = rate1│           │
     └──────────────────────┘             │
                 │                         │
                 ├─────────────────────────┘
                 ▼
              260
           ┌────────┐
Vers 240 ◄─┤  fin   │
           └────────┘
```

FIG.8